# EUROPÄISCHE PATENTSCHRIFT

(11) **EP 3 447 329 B1**
(45) Veröffentlichungstag und Bekanntmachung des Hinweises auf die Patenterteilung: **22.04.2020**
(21) Anmeldenummer: 18171991.5
(22) Anmeldetag: 14.05.2018
(51) Int. Cl.: F16F 9/04

(54) **ABDICHTUNGSANORDNUNG**
SEALING ARRANGEMENT
DISPOSITIF D'ÉTANCHÉITÉ

(30) Priorität: 07.08.2017 DE 102017213700
(43) Veröffentlichungstag der Anmeldung: 27.02.2019
(73) Patentinhaber: ContiTech Luftfedersysteme GmbH, 30165 Hannover (DE)
(72) Erfinder: Mosich, Manuel, 31157 Sarstedt (DE)
(74) Vertreter: Kilsch, Armin Ralph

(56) Entgegenhaltungen:
- EP-A2- 1 388 441
- EP-A2- 2 775 162
- DE-A1-102012 100 753
- US-A- 4 784 376

## Beschreibung

Die Erfindung betrifft eine Abdichtungsanordnung für einen Balg einer Luftfeder, welcher einen Balgkörper aufweist, der aus einem elastomeren Kunststoff mit Verstärkungseinlagen besteht sowie an mindestens einem freien axialen Ende einen elastischen Ringwulst aufweist, wobei die Abdichtungsanordnung eine kreisförmige Anschlussplatte sowie einen Wulstring aufweist.

Luftfedern kommen unter anderem bei Schienenfahrzeugen, Lastkraftwagen und vereinzelt auch bei Personenkraftwagen zum Einsatz, mit denen aufgrund einer fehlenden Eigendämpfung ein sensibles Ansprechverhalten realisierbar ist, woraus ein hoher Federungskomfort resultiert. Darüber hinaus kann mittels einer Luftfederung in vorteilhafter Weise die Fahrzeughöhe belastungsabhängig eingestellt werden, wobei im Fall von höheren Lasten das Federungsverhalten härter wird.

Derartige Luftfedern können durch das endseitige Montieren einer Bördelplatte an dem Luftfederbalg abgedichtet sein. Durch das Umformen der Bördelplatte wird ein Wulstbereich des Luftfederbalgs so umgeformt, dass ein hermetisch abgedichtetes pneumatisches System geschaffen wird. Von Nachteil ist dabei, dass prozessbedingte Abweichungen des Bördelspaltes auftreten können und eine zerstörungsfreie Überprüfung des Bördelspaltes sehr aufwendig ist. Darüber hinaus ist das Öffnen der Luftfedern, zum Beispiel zu Wartungszwecken, nicht möglich. Außerdem ist es bekannt, den Wulstring eines Luftfederbalgs mit der Anschlussplatte zu verschrauben. Zu diesem Zweck wird eine Anschlussplatte mithilfe einer Vielzahl von Schrauben mit einem Wulstring verschraubt, wobei durch das Anziehen der Schrauben der Wulstbereich verpresst wird, so dass gleichfalls ein hermetisch abgedichtetes pneumatisches System entsteht. Um eine zuverlässige Verbindung zwischen dem Wulstring und der Anschlussplatte bei einer gleichzeitig hermetischen Abdichtung zu erzielen, ist eine Anzahl von beispielsweise 40 Schrauben und gegebenenfalls Muttern vorzusehen und anzuziehen. Infolgedessen ergibt sich ein beträchtlich erhöhter Montage- und Wartungsaufwand.

Dokument EP 2 775 162 A2, welches als der nächstliegende Stand der Technik angesehen wird, offenbart die Merkmale des Oberbegriffs des Anspruchs 1.

Der Erfindung lag daher die Aufgabe zugrunde, eine Abdichtungsanordnung für einen Balg einer Luftfeder vorzustellen, welche leicht am Balg montierbar sowie gegebenenfalls wieder demontierbar ist.

Die Lösung dieser Aufgabe wird mit einer Abdichtungsanordnung erreicht, welche die Merkmale des Anspruchs 1 aufweist. Vorteilhafte Weiterbildungen sind in den abhängigen Ansprüchen genannt.

Demnach betrifft die Erfindung eine Abdichtungsanordnung für einen Balg einer Luftfeder, welcher einen Balgkörper aufweist, der aus einem elastomeren Kunststoff mit Verstärkungseinlagen besteht sowie an mindestens einem freien axialen Ende einen elastischen Ringwulst aufweist, wobei die Abdichtungsanordnung eine kreisförmige Anschlussplatte sowie einen Wulstring aufweist.

Zur Lösung der gestellten Aufgabe ist hierbei vorgesehen, dass die Anschlussplatte sowie der Wulstring geometrisch zueinander korrespondierend ausgebildete und angeordnete Bajonettverschlussmittel aufweisen, und dass der Ringwulst des Balgs derartig ausgebildet und angeordnet ist, dass dieser beim Schließen der Bajonettverbindung druckdicht zwischen der Anschlussplatte und dem Wulstring einklemmbar ist.

Durch die erfindungsgemäß vorgesehene zumindest bereichsweise formschlüssige Bajonettverbindung ist eine umfangsseitig besonders gleichmäßige mechanische Verpressung des Ringwulstes des Balgs mit der Anschlussplatte sichergestellt. Darüber hinaus ist eine einfache Montage der Abdichtungsanordnung gegeben. Ferner erfordert die Bajonettverbindung im Vergleich zu einer Schraubverbindung eine signifikant reduzierte Zahl von Einzelteilen. Zudem ist eine einfache sowie zerstörungsfreie Demontage der Abdichtungsanordnung zu Wartungs- oder Inspektionszwecken möglich. Ferner kann die Abdichtungsanordnung auch für Halbbälge bei Schienenfahrzeugen, für Faltenbälge oder Rollbälge für Nutzfahrzeuge zur Anwendung kommen.

Gemäß einer ersten Weiterbildung dieser Abdichtungsanordnung ist vorgesehen, dass am radial äußeren Ende der Anschlussplatte von dieser eine hohlzylindrische Außenwand koaxial zum Balgkörper absteht, dass an der hohlzylindrischen Außenwand radial innen erste Bajonettverschlussmittel ausgebildet sind, dass an dem Wulstring nach radial außen ragend zweite Bajonettverschlussmittel ausgebildet sind, dass die ersten und zweiten Bajonettverschlussmittel im Sinne eines Bajonettverschlusses miteinander verrastbar ausgebildet und angeordnet sind, dass der Wulstring radial innen ein Haltemittel zur Halterung des Ringwulst des Balgs aufweist, und dass das Haltemittel derartig ausgebildet und angeordnet ist, dass der Ringwulst des Balgs beim Schließen der Bajonettverbindung von dem Wulstring druckdicht gegen die Anschlussplatte gepresst wird.

Durch die geschilderte Verpressung des Ringwulstes des Balgs wird eine hermetische Abdichtung eines Innenraums des Luftfederbalgs mit vergleichsweise einfachen technischen Mitteln erreicht.

In weiterer Ausgestaltung des Bajonettverschluss kann vorgesehen sein, dass an der hohlzylindrischen Außenwand der Anschlussplatte als erste Bajonettverschlussmittel radial innen mindestens drei in Umfangsrichtung gleichmäßig zueinander beabstandet angeordnete sowie radial einwärts gerichtete Haltevorsprünge ausgebildet sind. Demgegenüber sind an dem Wulstring als zweite Bajonettverschlussmittel radial außen mindestens drei in Umfangsrichtung gleichmäßig zueinander beabstandet angeordnete und radial auswärts gerichtete Rastelemente ausgebildet. Infolgedessen umgreift die Anschlussplatte den Wulstring mit dem daran angeordneten freien Ende des Balgkörpers, wodurch ein besonders zuverlässiger Sitz gegeben ist.

Vorzugsweise sind an der Außenwand der Anschlussplatte und an dem Wulstring mindestens sechs umfangsseitig gleichmäßig zueinander beabstandet angeordnete Rastelemente ausgebildet. Hierdurch ist unter anderem eine umfangsseitig besonders gleichmäßige Lastverteilung gegeben.

Bevorzugt ist die Bajonettverbindung durch ein axiales Einschieben des Wulstrings in den Wandbereich der Anschlussplatte sowie durch eine anschließend zwischen dem Wulstring und der Anschlussplatte erfolgende relative Drehbewegung zueinander in den verriegelten Zustand überführbar. Hierdurch ist eine schnelle sowie einfache Montage der Abdichtungsanordnung an dem Balgkörper gewährleistet.

Vorzugsweise ist der Wulstring im verriegelten Zustand der Bajonettverbindung mit der Anschlussplatte verrastet. Infolgedessen wird ein unkontrolliertes Lösen der Bajonettverbindung zuverlässig verhindert. Alternativ dazu oder zusätzlich kann eine weitere Verdrehsicherung, wie zum Beispiel ein Sicherungsstift oder dergleichen, vorgesehen sein.

Gemäß einer vorteilhaften Ausgestaltung weisen die Rastelemente zur Erzeugung der axialen Verpressung des Ringwulstes des Balgkörpers eine Steigung in Bezug zu einer Längsmittelachse der Bajonettverbindung auf, wobei diese Steigung geometrisch korrespondierend zu einer Steigung der Haltevorsprünge ausgebildet ist. Hierdurch kann die umfangsseitige Verpressung des Ringwulstes des Balgkörpers und damit die Abdichtungswirkung weiter optimiert werden.

Eine andere technisch vorteilhafte Ausgestaltung sieht vor, dass die Haltevorsprünge und die Rastelemente jeweils eine kreisringsektorförmige Geometrie aufweisen, wobei ein Umfangsabstand zwischen jeweils zwei umfangsseitig unmittelbar benachbarten Haltevorsprüngen gleich oder ungleich der Umfangslänge der Haltevorsprünge ist. Infolgedessen kann der Wulstring koaxial zur Längsmittelachse in den Wandbereich der Anschlussplatte eingeschoben werden.

Gemäß einer anderen Weiterbildung kann vorgesehen sein, dass das Haltemittel am Wulstring zur Halterung des Ringwulstes als eine an diesem radial innen ausgebildete sowie in Richtung zur Anschlussplatte offene Ringnut ausgebildet ist, in welche der an dem freien Ende des Balgkörpers ausgebildete Ringwulst zumindest bereichsweise formschlüssig aufnehmbar ist. Hierdurch ergibt sich eine optimale Lagesicherung des Ringwulstes des Balgkörpers, woraus eine mechanisch hochbelastbare sowie hermetische Abdichtung zwischen dem Balgkörper und der Anschlussplatte resultieren.

Bei einer weiteren technisch günstigen Ausgestaltung der Abdichtungsanordnung schließt der Wulstring im verriegelten Zustand der Bajonettverbindung axial bündig mit der Außenwand der Anschlussplatte ab. Hierdurch wird ein punktueller oder linienhafter mechanischer Kontakt zwischen dem Balg der Luftfeder und der Abdichtungsanordnung vermieden.

Zum besseren Verständnis der Erfindung ist der Beschreibung eine Zeichnung beigefügt, die nachfolgend erläutert wird. In der Zeichnung zeigt
Fig. 1 eine perspektivische Ansicht einer aus dem Stand der Technik bekannten Luftfeder mit einer konventionellen Abdichtungsanordnung,
Fig. 2 einen Teilschnitt durch die Abdichtungsanordnung gemäß Fig. 1 entlang der Schnittlinie II-II der Fig. 1,
Fig. 3 eine Ansicht von unten auf eine Anschlussplatte einer erfindungsgemäßen Abdichtungsanordnung,
Fig. 4 eine Ansicht von unten auf einen Wulstring der erfindungsgemäßen Abdichtungsanordnung,
Fig. 5 eine perspektivische Ansicht der Anschlussplatte gemäß Fig. 3 zusammen mit einem koaxial ausgerichteten Wulstring gemäß Fig. 4 vor dem Erreichen eines Verriegelungszustands einer Bajonettverbindung, und
Fig. 6 einen Teilquerschnitt durch die Bajonettverbindung gemäß Fig. 5 im verriegelten Zustand.

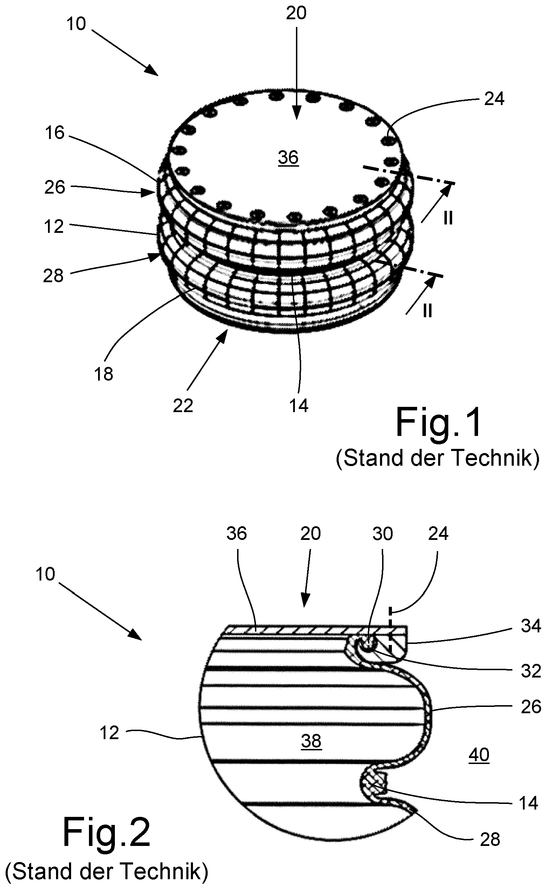

Die Fig. 1 zeigt demnach eine perspektivische Ansicht einer aus dem Stand der Technik bekannten Luftfeder 10 mit zwei zugeordneten Abdichtungsanordnungen 20, 22. Die Luftfeder 10 weist als wesentliches Bauteil einen weitgehend hohlzylindrischen Balg 12 mit einer etwa axial mittig ausgebildeten Einschnürung 14 auf. Der Balg 12 ist üblicherweise aus einem Gummimaterial oder einem gummiähnlichen Werkstoff gebildet, das mit Verstärkungseinlagen armiert ist. An den beiden axialen Enden 16, 18 des Balges 12 ist jeweils eine scheibenförmige Abdichtungsanordnung 20, 22 zur pneumatischen Abdichtung des Balges 12 der Luftfeder 10 sowie zur Anbindung derselben an zu federnde und zu dämpfende Fahrzeugelemente, wie zum Beispiel eine Karosserie, eine Achse oder dergleichen befestigt, wobei letztere in der Zeichnung nicht dargestellt sind. Jeweils beiderseits zur mittig zwischen den endseitigen Abdichtungsanordnungen 20, 22 verlaufenden Einschnürung 14 weist der Balg 12 einen ersten Balgabschnitt 26 und zweiten Balgabschnitt 28 auf, deren äußere Formgebung jeweils zumindest im Wesentlichen der eines Torus entspricht. Die endseitige Befestigung der beiden Abdichtungsanordnungen 20, 22 am Balg 12 erfolgt hier lediglich beispielhaft mit sechsunddreißig Schrauben 24 je Abdichtungsanordnung. Durch die Schrauben 24 gestalten sich die Montage sowie erforderlichenfalls eine Demontage der Luftfeder sehr aufwendig.

Fig. 2 zeigt einen axialen Teilschnitt durch die Abdichtungsanordnung 20 gemäß Fig. 1 entlang der dortigen Schnittlinie II-II. Ein am ersten axialen Ende 16 des Balgs 12 der Luftfeder 10 ausgeformter Ringwulst 30 mit einer zumindest näherungsweise halbkreisförmigen Querschnittsgeometrie ist teilweise in einer umlaufenden Ringnut 32 eines Wulstrings 34 der ersten Abdichtungsanordnung 20 aufgenommen.

Die Ringnut 32 des Wulstrings 34 verfügt zum Zweck der zumindest bereichsweisen formschlüssigen Aufnahme des Ringwulstes 30 des Balges 12 über eine angenähert halbkreisförmige Querschnittsgeometrie. Der Ringwulst 30 des Balges 12 ist zwischen dem Wulstring 34 und einer im Wesentlichen scheibenförmigen Anschlussplatte 36 der ersten Abdichtungsanordnung 20 axial fest eingespannt, wodurch ein Innenraum 38 des Balges 12 pneumatisch dicht gegenüber der äußeren Umgebung 40 abgeschlossen ist. Darüber hinaus ermöglicht die hier lediglich dargestellte erste Abdichtungsanordnung 20, ebenso wie die hier nicht dargestellte zweite Abdichtungsanordnung 22, eine hinreichend hoch belastbare mechanische Verbindung zwischen dem Balg 12 der Luftfeder 10 und einem Fahrzeugelement.

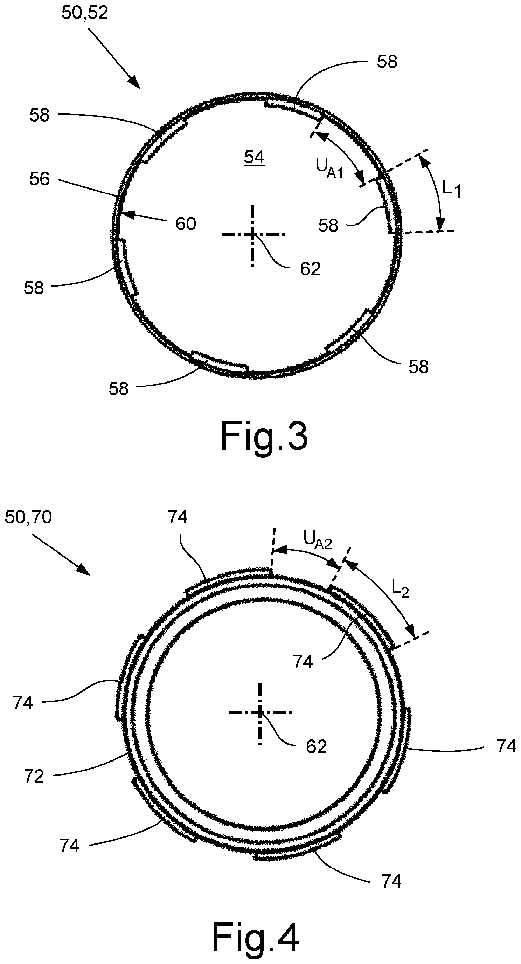

Die Fig. 3 zeigt eine Ansicht von unten auf eine Anschlussplatte 52 einer erfindungsgemäßen Abdichtungsanordnung 50. Diese Abdichtungsanordnung 50 umfasst unter anderem die zumindest im Wesentlichen topfförmige Anschlussplatte 52 mit einem kreisförmigen Deckel 54 beziehungsweise Boden und einer daran integral ausgebildeten hohlzylindrischen Außenwand 56. An der Außenwand 56 sind hier lediglich exemplarisch radial innen sechs gleichartige Haltevorsprünge 58 als Teil einer hier nicht dargestellten Bajonettverbindung ausgebildet. Diese Haltevorsprünge 58 weisen jeweils eine näherungsweise kreisringsektorförmige Geometrie auf und sind jeweils radial einwärts gerichtet. Die Umfangslänge L₁ der Haltevorsprünge 58 ist an einem dieser Haltevorsprünge 58 in Fig. 3 eingezeichnet.

Zwischen jeweils zwei in Umfangsrichtung der Anschlussplatte 52 direkt benachbarte Haltevorsprüngen 58 besteht jeweils ein erster Umfangsabstand U_{A1}, wobei die Summe aller sechs Umfangsabstände U_{A} und der sechs Umfangslängen L₁ der Haltevorsprünge 58 den Innenumfang 60 der Außenwand 56 der topfförmigen Anschlussplatte 52 der Abdichtungsanordnung bilden. Die Umfangslängen L₁ zwischen den jeweiligen Haltevorsprüngen 58 können gleich oder ungleich bemessen sein als die erwähnten Umfangsabstände U_{A1}. Hier sind die Umfangslängen L₁ exemplarisch kleiner als die Umfangsabstände U_{A1} dimensioniert. Die topfförmige Anschlussplatte 52 der Abdichtungsanordnung 50 ist darüber hinaus rotationssymmetrisch zu einer Längsmittelachse 62 der zu realisierenden Bajonettverbindung 80 ausgebildet.

Fig. 4 zeigt eine Ansicht von unten auf einen Wulstring 70 der erfindungsgemäßen Abdichtungsanordnung 50. Die Abdichtungsanordnung 50 ist demnach zweiteilig ausgebildet und weist neben der Anschlussplatte 52 noch einen Wulstring 70 auf, der rotationssymmetrisch zur Längsmittelachse 62 der herzustellenden Bajonettverbindung 80 ausgebildet ist. An einem massiven Grundkörper 72 des Wulstrings 70 sind hier lediglich exemplarisch radial außen sechs gleichartige Rastelemente 74 ausgebildet. Die jeweiligen freien Enden der Rastelemente 74 sind nach radial auswärts gerichtet und verfügen jeweils über eine im Wesentlichen kreisringsektorförmige Geometrie.

Die sechs Rastelemente 74 weisen jeweils eine Umfangslänge L₂ auf, die ungefähr dem jeweiligen Umfangsabstand zwischen jeweils zwei benachbarten Haltevorsprüngen 58 der Anschlussplatte 52 gemäß Fig. 3 entspricht, um das axiale Einführen des Wulstrings 70 in den Wandbereich der Anschlussplatte 52 zur Schaffung der Bajonettverbindung 80 zu ermöglichen. Der Umfangsabstand U_{A2} zwischen jeweils zwei unmittelbar benachbarten Rastelementen 74 des Wulstrings 70 korrespondiert im Übrigen in etwa mit der Umfangslänge L₁ der Haltevorsprünge 58 an der Anschlussplatte 52 gemäß Fig. 3. Außerdem ist die Umfangslänge L₂ der Rastelemente 74 hier jeweils größer als die Umfangsabstände U_{A2} zwischen jeweils zwei unmittelbar benachbarten Rastelementen 74. Alternativ dazu können die Umfangslängen L₂ gleich oder auch kleiner als die Umfangsabstände U_{A2} ausgebildet sein.

Unabhängig hiervon sind die jeweiligen Umfangslängen beziehungsweise Umfangsabstände U_{A1} der Haltevorsprünge 58 der Anschlussplatte 52 sowie die Umfangslängen L₂ beziehungsweise die Umfangsabstände U_{A2} der Rastelemente 74 des Wulstrings 70 jeweils in Abhängigkeit voneinander so bemessen, dass sich im verriegelten Zustand der Bajonettverbindung 80 zwischen den Haltevorsprüngen 58 und den Rastelementen 74 eine möglichst großflächige Überdeckung einstellt. Hierdurch wird im Ergebnis eine hinreichend feste sowie dauerhaft belastbare mechanische Verbindung zwischen der Anschlussplatte 52 und dem Wulstring 70 erzeugt.

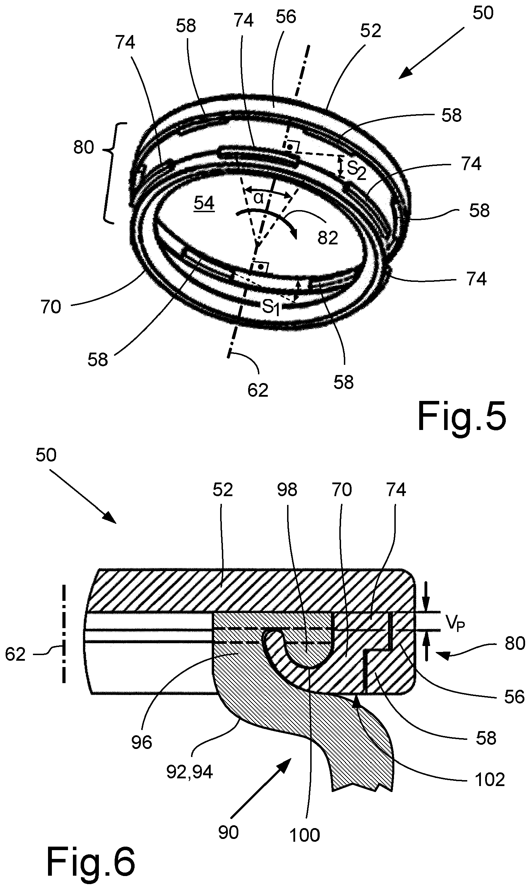

Fig. 5 zeigt eine perspektivische Ansicht des zu der Anschlussplatte 52 gemäß Fig. 3 fluchtend ausgerichteten Wulstrings 70 gemäß Fig. 4 vor dem Erreichen eines Verriegelungszustands der Bajonettverbindung 80. Die Anschlussplatte 52 sowie der Wulstring 70 der Abdichtungsanordnung 50 für einen Balg 12 einer Luftfeder 10 sind entlang der Längsmittelachse 62 zum Herstellen einer Bajonettverbindung 80 zueinander fluchtend positioniert, wobei der Balg 12 und die Luftfeder 10 der besseren zeichnerischen Übersicht halber hier nicht dargestellt sind. Die hier beispielhaft sechs Haltevorsprünge 58 der Anschlussplatte 52 weisen jeweils in Bezug zur Längsmittelachse 62 eine erste Steigung S₁ auf. Die sechs Rastelemente 74 des Wulstrings 70 weisen jeweils eine zur erstgenannten Steigung S₁ geometrisch korrespondierend bemessene zweite Steigung S₂ auf. Durch die aufgrund der beiden Steigungen S₁, S₂ nach Art eines Gewindes ineinander greifenden Haltevorsprünge 58 und Rastelemente 74 ist die zur Gewährleistung einer ausreichenden pneumatischen Abdichtungswirkung notwendige starke axiale Verpressung VP (siehe Fig. 6) des Balgs 92 der Luftfeder 90 zwischen der Anschlussplatte 52 und dem Wulstring 70 entlang der Längsmittelachse 62 mittels der Bajonettverbindung 80 sichergestellt.

Um die Bajonettverbindung 80 ausgehend von dem in Fig. 5 gezeigten offenen Zustand in den verriegelten Zustand (Fig. 6) zu überführen, wird der hier fluchtend zu der Anschlussplatte 52 positionierte Wulstring 70 koaxial zu der Längsmittelachse 62 in den axialen Wandbereich der Anschlussplatte 52 eingeführt und dort anschließend, wie mit dem Drehpfeil 82 angedeutet, durch eine Drehbewegung um die Längsmittelachse 62 im Uhrzeigersinn mit dieser verriegelt. Der Betrag des zum vollständigen Verriegeln der Bajonettverbindung 80 notwendigen Drehwinkels α hängt hierbei von den jeweiligen Umfangslängen der Haltevorsprünge 58 sowie der Rastelemente 74 ab. Das vollständige axiale Einführen des Wulstrings 70 in den axialen Wandbereich der Anschlussplatte 52 zum Verriegeln der Bajonettverbindung 80 ist hierbei nur möglich, wenn sich die Rastelemente 74 des Wulstrings 70 umfangsseitig jeweils zwischen zwei unmittelbar benachbarten Haltevorsprüngen 58 der Anschlussplatte 52 befinden. Das Entriegeln und Lösen der Bajonettverbindung 80 erfolgt in der umgekehrten Reihenfolge.

Um ein unkontrolliertes Lösen der Bajonettverbindung 80 zu vermeiden, ist der Wulstring 70 im verriegelten Zustand der Bajonettverbindung 80 in die Anschlussplatte 52 eingerastet beziehungsweise mit dieser verrastet. Darüber hinaus kann mindestens ein nicht dargestelltes Sicherungsmittel vorhanden sein, wie zum Beispiel ein federbelasteter Sicherungsstift oder dergleichen, um eine relative Drehbewegung zwischen der Anschlussplatte 52 und dem Wulstring 70 zu unterbinden. Zu diesem Zweck kann der Sicherungsstift radial einwärts mittels eines Federelements vorgespannt sein, sodass ein Lösen der Bajonettverbindung 80, beispielsweise zu Wartungs- oder Inspektionszwecken, nur durch ein radial auswärts gerichtetes Herausziehen des Sicherungsstiftes entgegen einer vom Federelement aufgebrachten Federkraft möglich ist.

Die Fig. 6 zeigt einen Teilquerschnitt durch die Bajonettverbindung 80 im verriegelten Zustand. Eine mittels der erfindungsgemäßen Abdichtungsanordnung 50 zumindest axial einseitig abgedichtete Luftfeder 90 umfasst dabei den flexiblen Balg 92, dessen Balgkörper 94 aus einem faserarmierten elastomeren Material besteht. An einem freien axialen Ende 96 eines Balgkörpers 94 ist ein elastischer Ringwulst 98 ausgebildet, der zumindest koaxial zur Längsmittelachse 62 flexibel beziehungsweise kompressibel ist. Die Ringwulst 98 weist eine angenähert halbkreisförmige Querschnittsgeometrie auf. Zur zumindest bereichsweise formschlüssigen Aufnahme der Ringwulst 98 des Balgs 92 verfügt der Wulstring 70 über eine umlaufende Ringnut 100 mit einer korrespondierend zu der Ringwulst 98 ausgebildeten, das heißt mit einer hier ebenfalls näherungsweise halbkreisförmigen Querschnittsgeometrie. Die Ringnut 100 ist hierbei in Richtung zur Anschlussplatte 52 offen ausgebildet.

Die in Fig. 6 dargestellte Bajonettverbindung 80 der Abdichtungsanordnung 50 befindet sich im vollständig verriegelten Zustand, so dass die Haltevorsprünge 58 der Anschlussplatte 52 jeweils die Rastelemente 74 des Wulstrings 70 hintergreifen und das axiale Ende 96 des Balgs 92 zwischen der Anschlussplatte 52 und dem Wulstring 70 mit der axialen Verpressung VP hermetisch dichtschließend eingespannt ist. Hierdurch ist zugleich eine mechanisch in allen Raumrichtungen hochbelastbare Verbindung zwischen dem Balg 92 der Luftfeder 90 und der Abdichtungsanordnung 50 gegeben, welche beispielsweise an ein hier nicht dargestelltes Fahrzeugelement, wie zum Beispiel eine Karosserie
oder eine Achse angebunden sein kann.

Darüber hinaus schließt der Wulstring 70 in dem hier dargestellten verriegelten Zustand der Bajonettverbindung 80 unter Schaffung einer planen, axial einwärts gerichteten Anlagefläche 102 bündig mit der hohlzylindrischen Außenwand 56 der Anschlussplatte 52 ab, wodurch ein etwaiger punktueller oder ein linienhafter mechanischer Kontakt zwischen dem Balg 92 und einer endseitigen Kante an der Außenwand 56 der Anschlussplatte 56 vermieden wird. Dementsprechend kann eine weitere, hier nicht dargestellte Abdichtungsanordnung an einem zweiten freien axialen Ende des Balgs 92 der Luftfeder 90 angeordnet sein.

Die erfindungsgemäße Abdichtungsanordnung 50 lässt sich auf einfache Weise an dem Balg 92 der Luftfeder 90 montieren und erforderlichenfalls auch mehrfach zerstörungsfrei sowie weitgehend werkzeuglos wieder demontieren. Im Vergleich zu bekannten, verschraubten oder gebördelten Abdichtungsanordnungen für Luftfedern ergibt sich somit ein beträchtlich reduzierter Montageaufwand.

Die Abdichtungsanordnung 50 kann abweichend von der hier lediglich exemplarisch dargestellten Luftfeder 90 mit dem Balg 92 auch an beliebigen Luftfedern mit Rollbälgen, Halbbälgen oder dergleichen Verwendung finden. Darüber hinaus ist ein Einsatz der Abdichtungsanordnung 50 zur endseitigen mechanischen Anbindung von Faltenbälgen, die üblicherweise zur Abdichtung von vorrangig linear in Relation zueinander bewegten Komponenten zum Schutz vor aus der Umgebung eindringenden Schmutzpartikeln und/oder Fluiden bestimmt sind, an weiteren Maschinenbauteilen möglich.

### Bezugszeichen

- 10: Luftfeder
- 12: Balg
- 14: Einschnürung
- 16: Erstes axiales Ende der Luftfeder
- 18: Zweites axiales Ende der Luftfeder
- 20: Erste Abdichtungsanordnung
- 22: Zweite Abdichtungsanordnung
- 24: Schraube
- 26: Erster Balgabschnitt
- 28: Zweiter Balgabschnitt
- 30: Ringwulst
- 32: Ringnut
- 34: Wulstring
- 36: Anschlussplatte
- 38: Innenraum des Balgs
- 40: Äußere Umgebung des Balgs
- 50: Abdichtungsanordnung
- 52: Anschlussplatte
- 54: Kreisförmiger Deckel
- 56: Außenwand der Anschlussplatte
- 58: Bajonettverschlussmittel, Haltevorsprünge
- 60: Innenumfang der Außenwand
- 62: Längsmittelachse
- 70: Wulstring
- 72: Grundkörper
- 74: Bajonettverschlussmittel, Rastelemente
- 80: Bajonettverbindung
- 82: Drehpfeil
- 90: Luftfeder
- 92: Balg
- 94: Balgkörper
- 96: Freies axiales Ende des Balgkörpers 90
- 98: Ringwulst des Balgkörpers 90
- 100: Haltemittel am Wulstring, Ringnut
- 102: Plane Anlagefläche am Wulstring
- α: Drehwinkel
- L₁: Umfangslänge eines Haltevorsprungs
- L₂: Umfangslänge eines Rastelements
- S₁: Steigung eines Haltevorsprungs
- S₂: Steigung eines Rastelements
- U_{A1}: Umfangsabstand zwischen zwei Haltevorsprüngen
- U_{A2}: Umfangsabstand zwischen zwei Rastelementen
- VP: Verpressung

## Patentansprüche

1. Abdichtungsanordnung (50) für einen Balg (92) einer Luftfeder (90), welcher einen Balgkörper (94) aufweist, der aus einem elastomeren Kunststoff mit Verstärkungseinlagen besteht sowie an mindestens einem freien axialen Ende (96) einen elastischen Ringwulst (98) aufweist, wobei die Abdichtungsanordnung (50) eine kreisförmige Anschlussplatte (52) sowie einen Wulstring (70) aufweist,
**dadurch gekennzeichnet, dass** die Anschlussplatte (52) sowie der Wulstring (70) geometrisch zueinander korrespondierend ausgebildete und angeordnete Bajonettverschlussmittel (58, 74) aufweisen, und dass der Ringwulst (98) des Balgs (92) derartig ausgebildet und angeordnet ist, dass dieser beim Schließen der Bajonettverbindung (80) druckdicht zwischen der Anschlussplatte (52) und dem Wulstring (70) einklemmbar ist.

2. Abdichtungsanordnung nach Anspruch 1, **dadurch gekennzeichnet, dass** am radial äußeren Ende der Anschlussplatte (52) von dieser eine hohlzylindrische Außenwand (56) koaxial zum Balgkörper (94) absteht, dass an der hohlzylindrischen Außenwand (56) radial innen erste Bajonettverschlussmittel (58) ausgebildet sind, dass an dem Wulstring (70) nach radial außen ragend zweite Bajonettverschlussmittel (74) ausgebildet sind, dass die ersten und zweiten Bajonettverschlussmittel (58, 74) im Sinne eines Bajonettverschlusses miteinander verrastbar ausgebildet und angeordnet sind, dass der Wulstring (70) radial innen ein Haltemittel (100) zur Halterung des Ringwulst (98) des Balgs (92) aufweist, und dass das Haltemittel (100) derartig ausgebildet und angeordnet ist, dass der Ringwulst (98) des Balgs (92) beim Schließen der Bajonettverbindung von dem Wulstring (70) druckdicht gegen die Anschlussplatte (52) gepresst wird.

3. Abdichtungsanordnung nach Anspruch 1 oder 2, **dadurch gekennzeichnet, dass** an der hohlzylindrischen Außenwand (56) radial innen als erste Bajonettverschlussmittel mindestens drei in Umfangsrichtung gleichmäßig zueinander beabstandet angeordnete sowie radial einwärts gerichtete Haltevorsprünge (58) ausgebildet sind.

4. Abdichtungsanordnung nach einem der Ansprüche 1 bis 3, **dadurch gekennzeichnet, dass** an dem Wulstring (70) radial außen als zweite Bajonettverschlussmittel mindestens drei in Umfangsrichtung gleichmäßig zueinander beabstandet angeordnete und radial auswärts gerichtete Rastelemente (74) ausgebildet sind.

5. Abdichtungsanordnung nach einem der Ansprüche 1 bis 4, **dadurch gekennzeichnet, dass** die Bajonettverbindung (80) durch ein axiales Einschieben des Wulstrings (70) in den Wandbereich der Anschlussplatte (52) sowie durch eine anschließend zwischen dem Wulstring (70) und der Anschlussplatte (52) erfolgende relative Drehbewegung zueinander in den verriegelten Zustand überführbar ist.

6. Abdichtungsanordnung nach Anspruch 5, **dadurch gekennzeichnet, dass** die Rastelemente (74) zur Erzeugung der axialen Verpressung (VP) eine Steigung (S₂) in Bezug zu der Längsmittelachse (62) der Bajonettverbindung (80) aufweisen, wobei diese Steigung (S₂) geometrisch korrespondierend zu einer Steigung (S₁) der Haltevorsprünge (58) ausgebildet ist.

7. Abdichtungsanordnung nach einem der Ansprüche 1 bis 6, **dadurch gekennzeichnet, dass** die Haltevorsprünge (58) und die Rastelemente (74) jeweils eine kreisringsektorförmige Geometrie aufweisen, wobei ein Umfangsabstand (U_{A1}) zwischen jeweils zwei umfangsseitig unmittelbar benachbarten Haltevorsprüngen gleich oder ungleich einer Umfangslänge (L₁) der Haltevorsprünge (58) ist.

8. Abdichtungsanordnung nach einem der Ansprüche 1 bis 7, **dadurch gekennzeichnet, dass** das Haltemittel am Wulstring (70) zur Halterung des Ringwulstes (98) als eine an diesem radial innen ausgebildete sowie in Richtung zur Anschlussplatte (52) offene Ringnut (100) ausgebildet ist, in welche der an dem freien Ende (96) des Balgkörpers (94) ausgebildete Ringwulst (98) zumindest bereichsweise formschlüssig aufnehmbar ist.

9. Abdichtungsanordnung nach einem der Ansprüche 1 bis 8, **dadurch gekennzeichnet, dass** der Wulstring (70) im verriegelten Zustand der Bajonettverbindung (80) axial bündig mit der Außenwand (56) der Anschlussplatte (52) abschließt.

## Claims

1. Sealing arrangement (50) for a bellows (92) of an air spring (90), which bellows (92) has a bellows body (94) which consists of an elastomeric plastic with reinforcing inserts and, at at least one free axial end (96), has an elastic annular bead (98), the sealing arrangement (50) having a circular connector plate (52) and a bead ring (70), **characterized in that** the connector plate (52) and the bead ring (70) have bayonet closure means (58, 74) which are configured and arranged so as to correspond geometrically to one another, and **in that** the annular bead (98) of the bellows (92) is configured and arranged in such a way that, in the case of the closure of the bayonet connection (80), it can be clamped in a pressure-tight manner between the connector plate (52) and the bead ring (70).

2. Sealing arrangement according to Claim 1, **characterized in that** a hollow-cylindrical outer wall (56) projects coaxially with respect to the bellows body (94) from the connector plate (52) at the radially outer end of the latter, **in that** first bayonet closure means (58) are configured radially on the inside on the hollow-cylindrical outer wall (56), **in that** second bayonet closure means (74) are configured on the bead ring (70) so as to protrude radially to the outside, **in that** the first and second bayonet closure means (58, 74) are configured and arranged such that they can be latched to one another in the sense of a bayonet closure, **in that** the bead ring (70) has a holding means (100) radially on the inside for securing the annular bead (98) of the bellows (92), and **in that** the holding means (100) is configured and arranged in such a way that the annular bead (98) of the bellows (92) is pressed in a pressure-tight manner against the connector plate (52) by the bead ring (70) in the case of the closure of the bayonet connection.

3. Sealing arrangement according to Claim 1 or 2, **characterized in that**, as first bayonet closure means, at least three holding projections (58) which are arranged spaced apart uniformly from one another in the circumferential direction and are directed radially inwards are configured radially on the inside on the hollow-cylindrical outer wall (56).

4. Sealing arrangement according to one of Claims 1 to 3, **characterized in that**, as second bayonet closure means, at least three latching elements (74) which are arranged spaced apart from one another uniformly in the circumferential direction and are directed radially outwards are configured radially on the outside on the bead ring (70).

5. Sealing arrangement according to one of Claims 1 to 4, **characterized in that** the bayonet connection (80) can be transferred into the locked state by way of axial pushing of the bead ring (70) into the wall region of the connector plate (52) and by way of a relative rotational movement which takes place subsequently between the bead ring (70) and the connector plate (52) with respect to one another.

6. Sealing arrangement according to Claim 5, **characterized in that** the latching means (74) have a slope (S₂) in relation to the longitudinal centre axis (62) of the bayonet connection (80) for producing the axial pressure (VP), the said slope (S₂) being configured so as to correspond geometrically to a slope (S₁) of the holding projections (58).

7. Sealing arrangement according to one of Claims 1 to 6, **characterized in that** the holding projections (58) and the latching elements (74) in each case have a circular ring sector-shaped geometry, a circumferential spacing (U_{A1}) between in each case two holding projections which are directly adjacent on the circumferential side of being equal to or not equal to a circumferential length (L₁) of the holding projections (58).

8. Sealing arrangement according to one of Claims 1 to 7, **characterized in that** the holding means on the bead ring (70) for holding the annular bead (98) is configured as an annular groove (100) which is configured radially on the inside on the said bead ring (70), is open in the direction of the connector plate (52), and into which the annular bead (98) which is configured at the free end (96) of the bellows body (94) can be received at least in regions in a positively locking manner.

9. Sealing arrangement according to one of Claims 1 to 8, **characterized in that**, in the locked state of the bayonet connection (80), the bead ring (70) terminates in an axially flush manner with the outer wall (56) of the connector plate (52).

## Revendications

1. Dispositif d'étanchéité (50) pour un soufflet (92) d'un ressort pneumatique (90), qui présente un corps de soufflet (94) qui se compose d'un plastique élastomère avec des inserts de renforcement et qui présente au niveau d'au moins une extrémité axiale libre (96) un bourrelet annulaire élastique (98), le dispositif d'étanchéité (50) présentant une plaque de raccordement circulaire (52) ainsi qu'une bague pour le bourrelet (70),
**caractérisé en ce que** la plaque de raccordement (52) ainsi que la bague pour le bourrelet (70) présentent des moyens de fermeture à baïonnette (58, 74) réalisés et disposés de manière à se correspondre géométriquement et **en ce que** le bourrelet annulaire (98) du soufflet (92) est réalisé et disposé de telle sorte que celui-ci puisse être serré de manière étanche à la pression entre la plaque de raccordement (52) et la bague pour le bourrelet (70) lors de la fermeture de la connexion à baïonnette (80).

2. Dispositif d'étanchéité selon la revendication 1, **caractérisé en ce qu'**à l'extrémité radialement extérieure de la plaque de raccordement (52) une paroi extérieure cylindrique creuse (56) fait saillie depuis celle-ci coaxialement vers le corps de soufflet (94), **en ce qu'**au niveau de la paroi extérieure cylindrique creuse (56) sont réalisés, radialement à l'intérieur, des premiers moyens de fermeture à baïonnette (58), **en ce qu'**au niveau de la bague pour le bourrelet (70) sont réalisés des deuxièmes moyens de fermeture à baïonnette (74) faisant saillie radialement vers l'extérieur, **en ce que** les premiers et les deuxièmes moyens de fermeture à baïonnette (58, 74) sont réalisés et disposés de manière à pouvoir s'encliqueter l'un dans l'autre dans le sens d'une fermeture à baïonnette, **en ce que** la bague pour le bourrelet (70) présente, radialement à l'intérieur, un moyen de retenue (100) pour retenir le bourrelet annulaire (98) du soufflet (92) et **en ce que** le moyen de retenue (100) est réalisé et disposé de telle sorte que le bourrelet annulaire (98) du soufflet (92), lors de la fermeture de la connexion à baïonnette, soit pressé de manière étanche à la pression par la bague pour le bourrelet (70) contre la plaque de raccordement (52) .

3. Dispositif d'étanchéité selon la revendication 1 ou 2, **caractérisé en ce qu'**au au moins trois saillies de retenue (58) disposées de manière espacée uniformément les unes des autres dans la direction périphérique et orientées radialement vers l'intérieur sont réalisées radialement à l'intérieur au niveau de la paroi extérieure cylindrique creuse (56) en tant que premiers moyens de fermeture à baïonnette.

4. Dispositif d'étanchéité selon l'une quelconque des revendications 1 à 3, **caractérisé en ce qu'**au moins trois éléments d'encliquetage (74) disposés de manière espacée uniformément les uns des autres dans la direction périphérique et orientés radialement vers l'extérieur sont réalisés radialement à l'extérieur en tant que deuxièmes moyens de fermeture à baïonnette au niveau de la bague pour le bourrelet (70).

5. Dispositif d'étanchéité selon l'une quelconque des revendications 1 à 4, **caractérisé en ce que** la connexion à baïonnette (80) peut être transférée dans l'état verrouillé par une insertion axiale de la bague pour le bourrelet (70) dans la région de paroi de la plaque de raccordement (52) ainsi que par un mouvement de rotation relatif effectué ensuite entre la bague pour le bourrelet (70) et la plaque de raccordement (52) l'une par rapport à l'autre.

6. Dispositif d'étanchéité selon la revendication 5, **caractérisé en ce que** les éléments d'encliquetage (74) pour générer le pressage axial (VP) présentent un pas (S₂) par rapport à l'axe médian longitudinal (62) de la connexion à baïonnette (80), ce pas (S₂) étant réalisé de manière à correspondre géométriquement à un pas (S₁) des saillies de retenue (58).

7. Dispositif d'étanchéité selon l'une quelconque des revendications 1 à 6, **caractérisé en ce que** les saillies de retenue (58) et les éléments d'encliquetage (74) présentent chacun une géométrie en forme de secteur de bague circulaire, une distance périphérique (U_{A1}) entre deux saillies de retenue respectives immédiatement adjacentes du côté de la périphérie étant égale à une longueur périphérique (L₁) des saillies de retenue (58), ou différente de celle-ci.

8. Dispositif d'étanchéité selon l'une quelconque des revendications 1 à 7, **caractérisé en ce que** le moyen de retenue au niveau de la bague pour le bourrelet (70) pour retenir le bourrelet annulaire (98) est réalisé sous la forme d'une rainure annulaire (100) réalisée radialement à l'intérieur au niveau de celui-ci et ouverte dans la direction de la plaque de raccordement (52), dans laquelle le bourrelet annulaire (98) réalisé au niveau de l'extrémité libre (96) du corps de soufflet (94) peut être reçu au moins en partie par engagement par correspondance de formes.

9. Dispositif d'étanchéité selon l'une quelconque des revendications 1 à 8, **caractérisé en ce que** la bague pour le bourrelet (70), dans l'état verrouillé de la connexion à baïonnette (80), se termine axialement en affleurement avec la paroi extérieure (56) de la plaque de raccordement (52).
